# EUROPEAN PATENT APPLICATION

(11) **EP 3 115 580 A1**
(43) Date of publication of application: **11.01.2017**
(21) Application number: 16178074.7
(22) Date of filing: 06.07.2016
(51) Int. Cl.: F02D 33/02, F02D 41/02, F02D 35/02, F02D 41/32, F02D 37/02, F02P 5/04, F02P 5/15, F01N 3/08, F02D 41/30, F02D 13/02

(54) **COMBUSTION MODE TRANSITION CONTROL DEVICE FOR AN INTERNAL COMBUSTION ENGINE HAVING A NOX STORAGE REDUCTION CATALYST**

(30) Priority: 07.07.2015 JP 2015136260
(71) Applicant: Toyota Jidosha Kabushiki Kaisha, Toyota-shi, Aichi-ken, 471-8571 (JP)
(72) Inventor: NOGAWA, Shinichiro, TOYOTA-SHI, AICHI-KEN, 471-8571 (JP)
(74) Representative: Intès, Didier Gérard André

(57) **Abstract**

The control device executes transition control when the operating state of the air flow control valve is switched during implementation of the lean burn operation, and the NOx storage amount which is estimated is smaller than a determination value (S4, S8, S10). According to the transition control, a combustion air-fuel ratio in a cycle of which an intake stroke overlaps a time period of switching the operating state of the air flow control valve is made leaner than the theoretical air-fuel ratio and richer than the predetermined air-fuel ratio. When the estimated value of the NOx storage amount is the determination value or more (S8), rich spike is executed during a predetermined time period including the time period of switching the operating state of the air flow control valve (S12).

## Description

### Background

### Field of the Disclosure

The present disclosure relates to a control device for an internal combustion engine equipped with a NOx storage reduction catalyst and capable of a lean burn operation by an air-fuel ratio which is leaner than a theoretical air-fuel ratio, and more particularly to a control device for an internal combustion engine equipped with an air flow control valve that changes a velocity of an air flow which is generated in a cylinder.

### Background Art

JP2012-057571A discloses the configuration where a NOx storage reduction catalyst is disposed upstream of a selective reduction catalyst, in an internal combustion engine capable of a lean burn operation by an air-fuel ratio that is leaner than a theoretical air-fuel ratio. The NOx storage reduction catalyst stores NOx in exhaust gas under a lean atmosphere, and releases the stored NOx to allow the NOx to react with reducing agents when the reducing agents such as HC and CO are supplied from an upstream side, to reduce NOx to NH₃ and N₂. A selective reduction catalyst has the function of adsorbing NH₃, and selectively reduces NOx in exhaust gas by NH₃. Consequently, according to the configuration, NOx which is generated during a lean burn operation can be effectively restrained from being released into the atmosphere.

There is known the art of promoting combustion and improving fuel efficiency by providing an air flow control valve such as a tumble control valve or a swirl control valve in an intake port and controlling the velocity of an air flow which is generated in a cylinder by the airflow control valve.

The art can be also applied to the internal combustion engine disclosed in JP2012-057571A. However, when the operating state of the air flow control valve is switched during implementation of a lean burn operation, the lean burn operation is easily affected by change of the air flows in the cylinders and change of a combustion air-fuel ratio. Consequently, combustion becomes more instable and worsening of exhaust performance and a torque fluctuation occur more easily, as compared with the case where switching is performed during implementation of a stoichiometric burn operation.

### Summary of the Disclosure

The present disclosure is conceived of in the light of the above described problem, and has an object to provide a control device for an internal combustion engine capable of restraining worsening of exhaust performance and a torque fluctuation that occur when an operating state of an air flow control valve is switched during implementation of a lean burn operation.

A control device for an internal combustion engine according to the present disclosure is a control device that controls an internal combustion engine including a NOx storage reduction catalyst disposed in an exhaust passage, and an air flow control valve that changes a velocity of an air flow generated in a cylinder, and capable of a lean burn operation by a predetermined air-fuel ratio that is leaner than a theoretical air-fuel ratio. In the present disclosure, the NOx storage reduction catalyst includes a three-way catalyst having a NOx storage function. The air flow control valve may be of a step switching type capable of switching an operating state thereof in at least two steps, or may be a continuous switching type capable of switching the operating state thereof continuously.

The present control device includes switching means that switches an operating state of the air flow control valve. Switching of the operating state of the air flow control valve may be performed on the basis of the operating state of the internal combustion engine which is fixed by torque and an engine speed. Further, the present control device includes NOx storage amount estimation means that estimates a NOx storage amount of the NOx storage reduction catalyst. The method for estimating the NOx storage amount is not limited.

The present control device includes transition control means that executes transition control when the operating state of the air flow control valve is switched during implementation of the lean burn operation, and the NOx storage amount which is estimated is smaller than a predetermination value. In the transition control, a combustion air-fuel ratio in a cycle of which an intake stroke overlaps a time period of switching the operating state of the air flow control valve is made leaner than the theoretical air-fuel ratio and richer than the predetermined air-fuel ratio (a normal set air-fuel ratio of the lean burn operation).

As a result that the time period of switching the operating state of the air flow control valve overlaps the intake stroke, a change in the air flow in the cylinder and a change in the combustion air-fuel ratio occur, and worsening of the exhaust performance and a torque fluctuation readily occur. However, the transition control is executed, and the combustion air-fuel ratio is made richer than the normal set air-fuel ratio of the lean burn operation, whereby stability of combustion can be ensured. The determination value of the NOx storage amount to be a determination reference of whether or not to execute the transition control is preferably a difference between the NOx amount capable of being stored by the NOx storage reduction catalyst and the amount of NOx that is generated by performing the transition control. That is, it is preferable that the transition control is executed under the condition that the NOx storage reduction catalyst has a room to store NOx generated by performing the transition control.

Further, the present control device includes rich spike means that executes rich spike when the operating state of the air flow control valve is switched during implementation of the lean burn operation, and the NOx storage amount which is estimated is the determination value or more. In rich spike, a combustion air-fuel ratio is made richer than the theoretical air-fuel ratio, for a predetermined time period including the time period of switching the operating state of the air flow control valve. A specific method of rich spike is not limited. The combustion air-fuel ratio may be made rich by increasing the fuel injection amount, or the combustion air-fuel ratio may be made rich by decreasing the in-cylinder air amount, or the combustion air-fuel ratio may be made rich by increasing the fuel injection amount and decreasing the in-cylinder air amount.

By switching of the operating state of the air flow control valve, a change in the air flow in the cylinder and a change in the combustion air-fuel ratio occur, and worsening of the exhaust performance and a torque fluctuation readily take place. However, rich spike is executed, and the combustion air-fuel ratio is made richer than the theoretical air-fuel ratio, whereby stability of combustion can be ensured. Further, reducing agents such as HC and CO are generated by rich spike, and the reducing agents are supplied to the NOx storage reduction catalyst, whereby NOx stored by the NOx storage reduction catalyst is reduced and purified by the reducing agents, and the available space of the NOx storage reduction catalyst is restored. The determination value of the NOx storage amount to be the determination reference of whether to execute rich spike or not may be the same value as the determination value for determining whether to execute transition control.

According to the present control device which is configured as described above, the combustion air-fuel ratio of the cycle which is affected by switching of the operating state of the air flow control valve is made richer than the normal set air-fuel ratio of the lean burn operation while being kept to be leaner than the theoretical air-fuel ratio, whereby worsening of the exhaust performance and a torque fluctuation can be restrained while stability of combustion is ensured. Further, when the available space of the NOx storage reduction catalyst is not sufficient, rich spike is executed, and the operating state of the air flow control valve is switched during execution of rich spike, whereby the available space of the NOx storage reduction catalyst is restored and at the same time, worsening of the exhaust performance and a torque fluctuation accompanying switching can be restrained.

The transition control means of the present control device may be configured to retard an ignition timing of the cycle in which the time period of switching the operating state of the air flow control valve overlaps the intake stroke, with respect to an intermediate ignition timing between an ignition timing corresponding to an operating state before switching of the air flow control valve, and an ignition timing corresponding to an operating state after switching of the air flow control valve, in the transition control. Since the air flow velocity in the cylinder affects a combustion speed, and therefore, in order to optimize the ignition timing to keep combustion efficiency high, the ignition timing may be regulated in accordance with the air flow velocity. When switching of the operating state of the air flow control valve is performed, the in-cylinder air flow velocity can be estimated to be an intermediate velocity between a velocity before switching and a velocity after switching. Therefore, the ignition timing corresponding to the intermediate velocity, that is, the intermediate ignition timing between the ignition timing corresponding to the operating state before switching and the ignition timing corresponding to the operating state after switching is considered to be able to keep the combustion efficiency high even in the transitional state between before switching and after switching. However, the combustion air-fuel ratio in the transitional state is richer than the normal set air-fuel ratio of the lean burn operation, and therefore, a torque increase corresponding to this may be considered. Therefore, the intermediate ignition timing between the ignition timing before switching and the ignition timing after switching is set as a reference, and the ignition timing which is retarded from that is made an ignition timing in the cycle of which the intake stroke overlaps the time period of switching of the operating state of the air flow control valve, whereby a torque fluctuation accompanying switching of the operating state of the air flow control valve can be restrained more.

In the internal combustion engine to which the control device is applied, the air flow control valve may be provided in each of the cylinders, and the air flow control valves in the respective cylinders may be configured to operate integrally. In this case, it is preferable that the switching means is configured to perform switching of the operating state of the air flow control valves in such a manner that the time period of switching the operating state of the air flow control valves overlaps only an intake stroke of any one of the plurality of cylinders. Further, the transition control means may be configured to make a combustion air-fuel ratio of the cylinder of which the intake stroke overlaps the time period of switching the operating state of the air flow control valve, leaner than the theoretical air-fuel ratio and richer than the predetermined air-fuel ratio. By being configured in this way, the number of cylinders which are affected by switching of the operating state of the air flow control valves can be restrained to the minimum.

Further, in this case, the transition control means may be configured to retard an ignition timing of the cylinder of which the intake stroke overlaps the time period of switching the operating state of the air flow control valves, with respect to an intermediate ignition timing between an ignition timing corresponding to an operating state before switching of the air flow control valves, and an ignition timing corresponding to an operating state after switching of the air flow control valves, in the transition control. By being configured in this way, the transition control means can restrain a torque fluctuation accompanying switching of the operating state of the air flow control valve more.

If the internal combustion engine to which the present control device is applied includes a combustion pressure sensor in each of the cylinders, the control device may include means that identifies a worst combustion cylinder in which combustion is the worst of all the cylinders by processing signals of the combustion pressure sensors. Since whether combustion is good or bad appears in combustion pressure, whether combustion is good or bad for each of the cylinders can be determined by processing the signal from the combustion pressure sensor, and the worst combustion cylinder can be identified from the determination result. In this case, the switching means may be configured to perform switching of the operating state of the air flow control valves so that the time period of switching the operating state of the air flow control valves and an intake stroke of a cylinder subsequent to the worst combustion cylinder in a sequence of ignition, overlap each other. By being configured in this way, the control device reduces the influence of switching of the operating state of the air flow control valve onto the cylinder with bad combustion, and can restrain worsening of the exhaust performance and a torque fluctuation accompanying switching of the operating state of the air flow control valve.

Further, if the internal combustion engine to which the present control device is applied includes a combustion pressure sensor in each of the cylinders, the present control device may include means that identifies a best combustion cylinder in which combustion is the best of all the cylinders by processing signals of the combustion pressure sensors. Whether combustion is good or bad can be determined for each of the cylinders by processing the signals from the combustion pressure sensors, and from the determination result, the best combustion cylinder can be identified. In this case, the switching means may be configured to perform switching of the operating state of the air flow control valve so that the time period of switching the operating state of the air flow control valves and an intake stroke of the best combustion cylinder overlap each other. By being configured in this way, the control device can effectively restrain worsening of the exhaust performance and a torque fluctuation accompanying switching of the operating state of the air flow control valves.

As described above, according to the control device for the internal combustion engine according to the present disclosure, worsening of the exhaust performance and a torque fluctuation which occur when the operating state of the air flow control valve is switched during implementation of the lean burn operation can be restrained.

### Brief Description of the Drawings

Fig. 1 is a diagram showing a configuration of a system according to an embodiment of the present disclosure;
Fig. 2 is a diagram showing a relationship between an operation region and an operating state of a tumble control valve;
Fig. 3 is a diagram explaining transition control relating to switching of the operating state of the tumble control valve;
Fig. 4 is a diagram showing a relationship between a NOx generation amount and an air-fuel ratio;
Fig. 5 is a diagram explaining rich spike relating to switching of the operating state of the tumble control valve;
Fig. 6 is a flowchart showing a control flow of engine control relating to switching of the operating state of the tumble control valve;
Fig. 7 is a time chart showing a specific example of the engine control relating to switching of the operating state of the tumble control valve;
Fig. 8 is a diagram showing an example of an air model for use in estimation of an in-cylinder air amount;
Fig. 9 is a diagram showing an example of a map for use in setting of an ignition timing when the tumble control valve is opened;
Fig. 10 is a diagram showing an example of a map for use in setting of the ignition timing when the tumble control valve is closed;
Fig. 11 is a diagram showing an example of a map for use in setting of the ignition timing when switching of the operating state of the tumble control valve is conducted; and Fig. 12 is a diagram explaining rich spike using a variable valve device.

### Detailed Description of the Preferred Embodiment

Hereinafter, an embodiment of the present disclosure will be described with reference to the drawings.

### 1. System Configuration of Embodiment

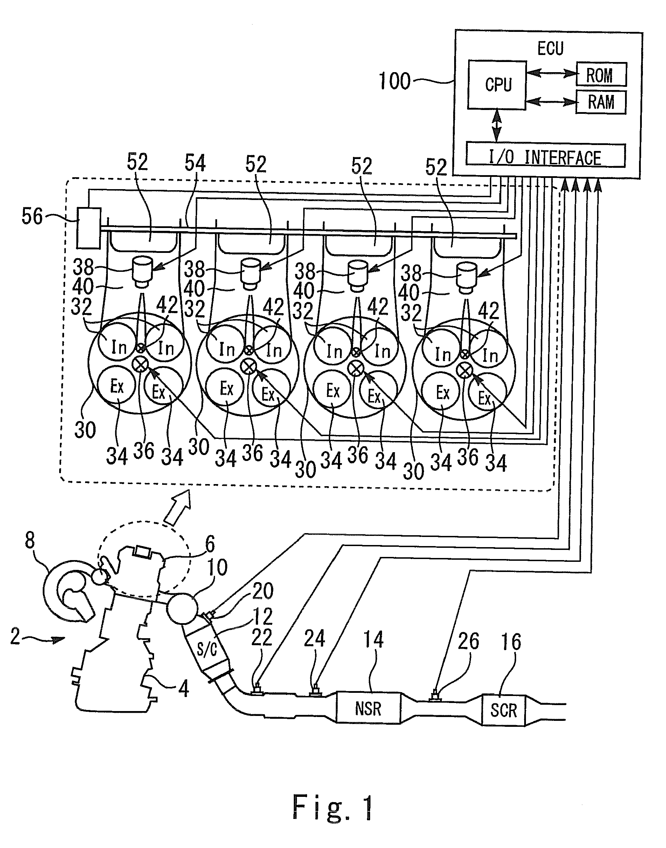

Fig. 1 is a diagram showing a configuration of a system according to an embodiment of the present disclosure. The system according to the present embodiment is equipped with an internal combustion engine (hereinafter, simply referred to as an engine) 2 that is loaded on an automobile as a power plant. The engine 2 according to the present embodiment is a lean burn engine capable of a lean burn operation by an air-fuel ratio that is leaner than a theoretical air-fuel ratio.

The engine 2 is equipped with a cylinder block 4 and a cylinder head 6. An intake passage 8 and an exhaust passage 10 are connected to the cylinder head 6. A throttle not illustrated is disposed in the intake passage 8. In the exhaust passage 10, a start catalyst (hereinafter, referred to as an S/C) 12 which is a three-way catalyst, an NOx storage reduction catalyst (hereinafter, referred to as an NSR) 14, and a selective reduction catalyst (hereinafter, referred to as an SCR) 16 are disposed in sequence from an upstream side thereof. The NSR 14 stores NOx in exhaust gas in a form of a nitrate under a lean atmosphere with a high oxygen concentration. Subsequently, when reducing agents like HC, CO, H₂ are supplied by rich spike, the NSR 14 releases the stored NOx to allow the reducing agents to react with NOx to reduce the NOx to N₂ and NH₃. The SCR 16 adsorbs NH₃ which is generated in the NSR 14 by rich spike. Subsequently, the adsorbed NH₃ and NOx in exhaust gas are allowed to react with each other to reduce NOx to N₂. Air-fuel ratio sensors 20 and 22 are attached to an inlet side and an outlet side of the S/C 12, and NOx sensors 24 and 26 are attached to an inlet side and an outlet side of the NSR 14.

In Fig. 1, a configuration of an inside of the cylinder head 6 is schematically drawn. In the present embodiment, the engine 2 is configured as an in-line four-cylinder engine in which four cylinders 30 are disposed in a line. Further, the engine 2 is a spark-ignition engine. An ignition plug 36 and a combustion pressure sensor 42 are attached to a top portion of each of the cylinders 30. Each of the cylinders 30 is equipped with a pair of intake valves 32 and a pair of exhaust valves 34. Though not illustrated, a variable valve device that makes valve timing variable is provided in each of the intake valves 32 and the exhaust valves 34. An intake port 40 which is independent for each of the cylinders 30 is connected to the intake valves 32. The intake port 40 is internally provided with a port injection valve 38 that injects fuel into the intake port 40. In the present embodiment, a lean burn operation is performed by homogeneous lean combustion that homogeneously mixes the fuel injected from the port injection valves 38 and air to combust the mixture.

The engine 2 is equipped with air flow control valves for controlling velocities of air flows generated in the cylinders, in more detail, tumble control valves (hereinafter, referred to as TCVs) 52 for controlling velocities of tumble flows. The TCV 52 is provided upstream from the port injection valve 38 of the intake port 40 in each of the cylinders 30. All the TCVs 52 are fixed to a single valve shaft 54. The valve shaft 54 is rotatable, and is rotationally driven by an electric motor 56. The valve shaft 54 is rotated by the electric motor 56, whereby operating states of all the TCVs 52 are integrally switched from opening to closing, or from closing to opening.

The system according to the present embodiment is equipped with a control device 100 that controls the engine 2. The control device 100 is an ECU (Electronic Control Unit) having at least an input and output interface, a ROM, a RAM and a CPU. The input and output interface takes in sensor signals from various sensors attached to the engine 2 and a vehicle, and outputs operation signals to actuators provided in the engine 2. Various data including various programs and maps for use in control of the engine 2 are stored in the ROM. The CPU reads a program from the ROM and executes the program, whereby various functions are realized by the control device 100.

### 2. Switching of Operating State of TCV

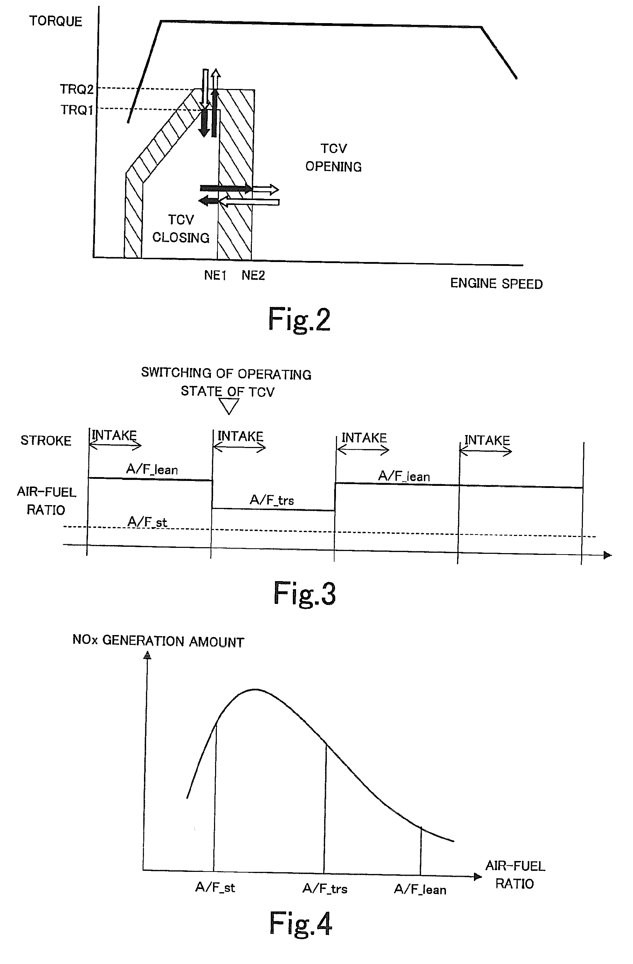

The functions which are realized in the control device 100 include a function of switching an operating state of the TCVs 52 in accordance with an operation region of the engine 2. Fig. 2 is a diagram showing a relationship between the operation region of the engine 2 and the operating state of the TCV 52. In Fig. 2, a region described as "TCV opening" is a region where the TCV 52 is opened, and a region described as "TCV closing" is a region where the TCV 52 is closed.

A shaded region between the TCV opening region and the TCV closing region is a hysteresis region. When an operation point of the engine 2 shifts from the TCV opening region to the TCV closing region, the TCV 52 is opened in the hysteresis region. Conversely, when the operation point of the engine 2 shifts from the TCV closing region to the TCV opening region, the TCV 52 is closed in the hysteresis region. In Fig. 2, directions of arrows indicate directions of shifts of the operation point, a black color means that the TCV 52 is closed, and a white color means that the TCV 52 is opened. For example, when an engine speed changes with a fixed torque, the TCV 52 is switched from opening to closing in an engine speed NE1 at a time of deceleration, and the TCV 52 is switched from closing to opening in an engine speed NE2 at a time of acceleration. When torque changes whereas the engine speed is fixed, the TCV 52 is switched from opening to closing in a torque TRQ1 at a time of torque reduction, and the TCV 52 is switched from closing to opening in a torque TRQ2 at a time of torque increase.

A polygonal line shown by a thick solid line in Fig. 2 is a boundary line between a region where a stoichiometric burn operation is performed and a region where a lean burn operation is performed, and shows a maximum torque which is realizable by the lean burn operation at each of engine speeds. A region at a low torque side from the boundary line is a region where a lean burn operation is performed. A combustion air-fuel ratio at a time of a lean burn operation is set at a strong lean air-fuel ratio (a value of approximately 26.5, for example) which is made fuel-lean near to a misfire limit.

### 3. Engine Control Relating to Switching of Operating State of TCV

According to the relationship between the operation region of the engine 2 and the operating state of the TCV 52 shown in Fig. 2, switching of the operating state of the TCV 52 is performed during implementation of the lean burn operation. At this time, combustion easily becomes unstable, and worsening of the exhaust performance and a torque fluctuation easily occur. In order to restrain this, it is effective to implement enrichment of the combustion air-fuel ratio in combination with switching of the operating state of the TCVs 52. If the combustion air-fuel ratio is enriched with respect to a normal set air-fuel ratio of the lean burn operation, combustion is stabilized, and worsening of the exhaust performance and a torque fluctuation can be restrained. However, if the combustion air-fuel ratio is simply enriched, the fuel consumption amount increases and the fuel efficiency performance is worsened. Therefore, the control device 100 executes transition control which will be described as follows, when the control device 100 performs switching of the operating state of the TCVs 52 during implementation of the lean burn operation.

### 3-1. Outline of Transition Control

Fig. 3 is a diagram explaining the transition control relating to switching of the operating state of the TCV 52. A horizontal axis in Fig. 3 represents a time (or a crank angle). Fig. 3 shows a time period of an intake stroke in each cycle, timing for switching the operating state of the TCV 52, and setting of the air-fuel ratio in each cycle. When the operating state of the TCV 52 is switched in the time period in which the intake valves 32 are opened, a change occurs to the velocity of the tumble flow in the cylinder. Consequently, the influence of switching of the operating state of the TCV 52 is exerted on the cycle in which the time period of switching overlaps the intake stroke. Thus, in the transition control, a combustion air-fuel ratio in the cycle in which the time period of switching the operating state of the TCV 52 overlaps the intake stroke is set at an air-fuel ratio A/F_trs (a value of approximately 20 to 24, for example) that is leaner than a theoretical air-fuel ratio A/F_st, and is richer than a normal set air-fuel ratio A/F_lean of the lean burn operation.

By setting the combustion air-fuel ratio to be richer than the set air-fuel ratio A/F_lean, stability of combustion at the time of switching can be ensured. By setting the combustion air-fuel ratio to be leaner than the theoretical air-fuel ratio A/F_st to keep the lean burn operation, the fuel consumption amount can be restrained from increasing significantly. In the cycles of which the intake strokes does not overlap the time period of switching the operating state of the TCV 52, the influence of switching is small, and therefore, the combustion air-fuel ratio is set at the normal set air-fuel ratio A/F_lean.

By executing transition control in combination with switching of the operating state of the TCV 52 as above, stability of combustion can be ensured while the fuel consumption amount is restrained from increasing significantly. However, depending on the condition, exhaust gas performance is sometimes worsened by executing the transition control.

Fig. 4 is a diagram showing a relationship between the NOx generation amount and the air-fuel ratio. In the air-fuel ratio which is slightly leaner than the theoretical air-fuel ratio A/F_st, a generation amount of NOx becomes the maximum, and the generation amount of NOx becomes smaller as the fuel-lean degree is larger than that air-fuel ratio. Since the normal set air-fuel ratio A/F_lean is an air-fuel ratio which is made lean to an extent near the misfire limit, the generation amount of NOx can be restrained to the minimum according to the set air-fuel ratio A/F_lean. However, since the air-fuel ratio A/F_trs of the transition control is made richer than the set air-fuel ratio A/F_lean, the generation amount of NOx is increased by executing the transition control. Even if the generation amount of NOx is increased, generated NOx can be adsorbed if the NSR 14 has a sufficient available space. However, if the transition control is executed when the NSR 14 does not have a sufficient available space, a part of the generated NOx flows to downstream without being adsorbed by the NSR 14.

Thus, the control device 100 executes rich spike which will be described as follows in place of the transition control, when switching of the operating state of the TCV 52 is performed during implementation of the lean burn operation and the available space of the NSR 14 is insufficient.

### 3-2. Outline of Rich Spike

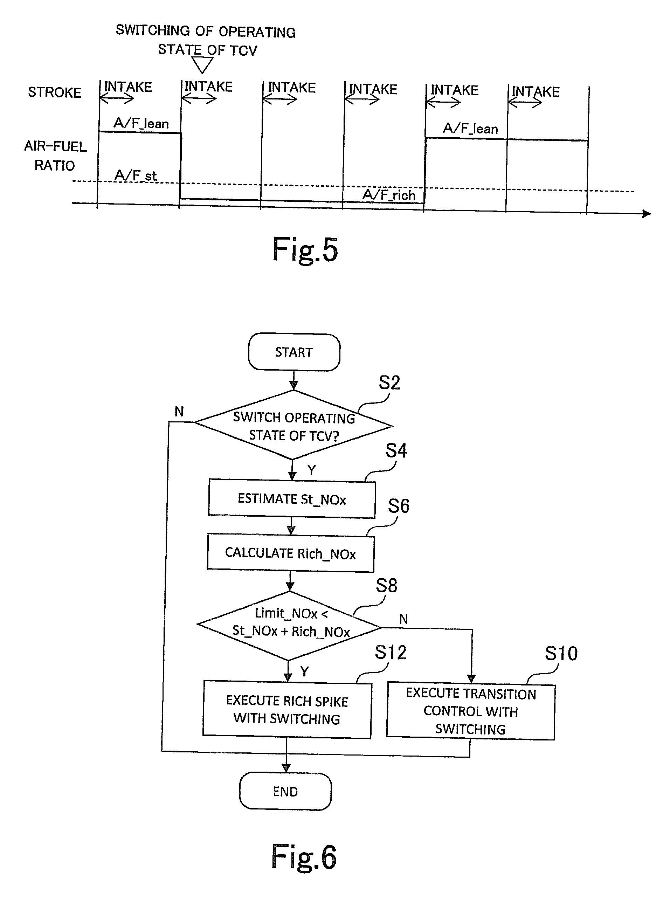

Fig. 5 is a diagram explaining rich spike relating to switching of the operating state of the TCV 52. A horizontal axis in Fig. 5 represents a time (or a crank angle). Fig. 5 shows a time period of the intake stroke in each cycle, timing of switching the operating state of the TCV 52, and setting of an air-fuel ratio in each cycle. The rich spike is performed with an objective of restoring a NOx storage ability of the NSR 14 by supply of a reducing agent, and in the rich spike, the combustion air-fuel is set at the air-fuel ratio A/F_rich (a value of approximately 12 to 14, for example) that is richer than the theoretical air-fuel ratio A/F_st throughout a plurality of cycles. The control device 100 regulates a timing for switching the operating state of the TCV 52 and a timing of the rich spike, in such a manner that the time period of switching the operating state of the TCV 52 is included in the time period of the rich spike.

By setting the combustion air-fuel ratio to be richer than the theoretical air-fuel ratio A/F_st by the rich spike, stability of combustion at the time of switching can be ensured. Further, since treatment for restoring the NOx storage ability of the NSR 14 needs to be performed regularly, performing rich spike under the condition that the available space of the NSR 14 is insufficient does not worsen fuel efficiency performance.

As above, when the available space of the NSR 14 is insufficient, rich spike is executed in combination with switching of the operating state of the TCV 52, whereby the NOx storage ability can be restored while stability of combustion is ensured.

### 3-3. Flow of Engine Control

Fig. 6 is a flowchart showing a control flow of engine control relating to switching of the operating state of the TCV 52. In the case of performing switching of the operating state of the TCV 52, the control device 100 selects either one of the transition control or rich spike described above by a procedure shown in the flowchart.

First, in step S2, it is determined whether or not to perform switching of the operating state of the TCV 52, on the basis of a target operation point of the engine 2. When the target operation point of the engine 2 shifts to the opening region from the region of closing the TCV 52, or when the target operation point shifts to the closing region from the region of opening the TCV 52, the determination in step S2 is affirmative. When the determination in step S2 is negative, all of the following processes are skipped, and neither the transition control nor rich spike is performed.

When the determination in step S2 is affirmative, processing in step S4 is performed. In step S4, estimation of the NOx storage amount (St_NOx) of the NSR 14 is performed. The NOx storage amount can be estimated from a lean burn operation time period after the previous rich spike, an integrated air amount in the lean burn operation, a travel distance in the lean burn operation and the like. However, in the present disclosure, a method for estimating the NOx storage amount is not limited.

Further, processing in step S6 is performed in addition to the processing in step S4. In step S6, the amount of NOx (Rich_NOx) that is generated when the transition control is executed is calculated. In calculation of the NOx generation amount in the transition control, maps using the torque and the engine speed as parameters are used. The maps are created on the basis of an experimental result, and two kinds of maps are prepared, which are a map that relates the amount of NOx generated when the TCV 52 is switched to closing from opening, to the torque and the engine speed, and a map that relates the amount of NOx generated when the TCV 52 is switched to opening from closing, to the torque and the engine speed. A sequence of the processing in step S4 and the processing in step S6 may be reversed.

Next, in step S8, it is determined whether or not a total value of the NOx storage amount (St_NOx) estimated in step S4 and the NOx generation amount (Rich_NOx) calculated in step S6 exceeds an allowable NOx storage amount (Limit_NOx) that is the NOx amount which can be stored by the NSR 14. That is, it is determined whether or not the available space of the NSR 14 is sufficient. In relation with the disclosure according to claims, a value obtained by subtracting the NOx generation amount (Rich_NOx) from the allowable NOx storage amount (Limit_NOx) corresponds to a "determination value" with respect to the NOx storage amount. The determination value may be calculated by using the map having the torque and engine speed as parameters, and it may be determined whether or not the NOx storage amount (St_NOx) exceeds the determination value. If the NOx generation amount (Rich_NOx) does not change significantly in accordance with the operating state of the engine 2, the determination value may be set at a fixed value.

When the determination in step S8 is negative, that is, when the available space of the NSR 14 is sufficient, performing the transition control in combination with switching of the operating state of the TCV 52 is selected, and executed (step S10). When the determination in step S8 is affirmative, that is, when the available space of the NSR 14 is insufficient, performing rich spike in combination with switching of the operating state of the TCV 52 is selected, and executed (step S12).

### 3-4. Specific Example

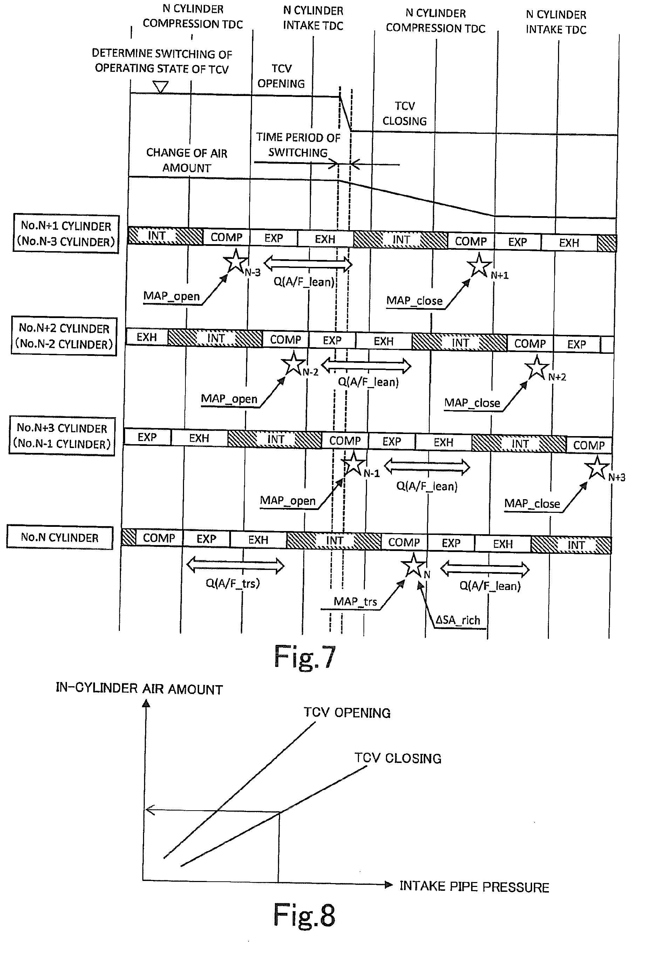

Fig. 7 is a time chart showing a specific example of engine control relating to switching of the operating state of the TCVs 52, in more detail, a specific example of the transition control. Fig. 7 shows a change of the operating state of the TCVs 52 according to the crank angle, a change of the in-cylinder air amount according to the crank angle, and changes according to the crank angle, of strokes of the four cylinders from an N^{th} cylinder (number N cylinder) to an N+3^{th} cylinder (number N+3 cylinder) in the sequence of ignition, in combination. Since the engine 2 according to the present embodiment is an in-line four-cylinder engine, the number N cylinder to the number N+3 cylinder are all different cylinders, and phases of the strokes are shifted by 180 degrees in the sequence of ignition. Further, the number N+1 cylinder is also a number N-3 cylinder, the number N+2 cylinder is also a number N-2 cylinder, and the number N+3 cylinder is also a number N-1 cylinder. A star mark placed in the compression stroke in each of the cylinders represents ignition timing by the ignition plug 36, and a subscript following the star mark indicates the sequence of ignition. Double-pointed arrows which are drawn from an expansion stroke to an exhaust stroke indicate time periods of fuel injection by the port injection valves 38. In the lean burn operation, fuel injection by the port injection valves 38 is performed by asynchronous injection that injects fuel while the intake valves 32 are closed.

The intake valve 32 opens at a timing earlier than an intake TDC, and closes at a timing later than a BDC. Consequently, a section of the intake stroke is larger than 180 degrees, and sections of the intake strokes overlap one another among the cylinders. However, in the intake stroke of each of the cylinders has a section that does not overlap the intake strokes of the other cylinders. The control device 100 executes switching of the operating state of the TCVs 52 so as to overlap only the intake stroke of any one of the cylinders. An influence which is exerted on the tumble flows in the cylinders by switching of the operating state of the TCVs 52 becomes remarkable when the switching time period overlaps the intake stroke. Consequently, if the switching time period is caused to overlap only the intake stroke of one of the cylinders, the influence of switching of the operating state of the TCVs 52 can be restrained from being exerted on the other cylinders.

In the example shown in Fig. 7, the control device 100 executes switching of the operating state of the TCVs 52 in such a manner that the switching time period of the operating state of the TCV 52 overlaps only the intake stroke of the number N cylinder. The reason why switching is performed in the intake stroke of the number N cylinder is that the timing of fuel injection firstly arrives at the number N cylinder after the switching of the operation state of the TCV 52 is determined. In the transition control which is performed in correspondence with switching of the operating state of the TCVs 52, the combustion air-fuel ratio is made richer than the normal set air-fuel ratio of the lean burn operation, and to do so, the fuel injection amount needs to be increased. In the example shown in Fig. 7, switching is determined before the intake stroke in the number N-2 cylinder, but increasing the fuel injection amount is not in time for fuel injection in the number N-2 cylinder, and is not in time for fuel injection in the number N-1 cylinder. The first cylinder in which increasing the fuel injection amount is in time for fuel injection is the number N cylinder.

The operating state of the TCVs 52 is switched to closing from opening. Due to the influence thereof, an in-cylinder air flow velocity of the number N cylinder changes transitionally. When the control device 100 determines switching to closing from opening of the operating state of the TCVs 52, the control device 100 increases the fuel injection amount Q of the number N cylinder in anticipation of change of the combustion velocity accompanying a transitional change of the in-cylinder air flow velocity. In more detail, the control device 100 calculates the fuel injection amount Q (A/F_trs) on the basis of an estimated in-cylinder air amount so that the combustion air-fuel ratio relating to the N^{th} ignition becomes the set air-fuel ratio A/F trs of the transition control. There is a difference in a degree of the influence which is exerted on the combustion by switching of the operation state, between the case where the operating state of the TCV 52 is switched to opening from closing and the case where the operating state of the TCV 52 is switched to closing from opening. Consequently, the set air-fuel ratios A/F trs of the transition control are separately set in the case where the operating state of the TCV 52 is switched to opening from closing and the case where the operating state of the TCV 52 is switched to closing from opening.

The estimated in-cylinder air amount is an air amount that is estimated from the operating states of the throttle and the TCVs 52, and is calculated by using an air model. Since the air model is known, detailed explanation thereof is not made, but only an outline will be described. First, an estimated intake pressure (an estimated pressure in a space downstream of the throttle and upstream of the TCV 52) is calculated from a target throttle opening degree, with use of a throttle model which is obtained by modeling the throttle by a formula of the nozzle. Subsequently, the estimated in-cylinder air amount is calculated from the estimated intake pressure with use of an intake valve model obtained by forming a relationship between the in-cylinder air amount and the intake pressure into a model by a linear expression on the basis of an experimental result. Fig. 8 is a diagram showing an example of the intake valve model configuring an air model. Since the flow coefficients differ when the TCVs 52 are opened and when the TCVs 52 are closed, the linear expression showing the relationship between the in-cylinder air amount and the intake pressure is switched in accordance with the operating state of the TCVs 52. However, since a change in the in-cylinder air amount has a response delay with respect to a change in the operating state of the TCV 52, processing for restraining an abrupt change in the estimated in-cylinder air amount, for example, smoothing processing is performed for the estimated in-cylinder air amount which is calculated after switching of the operating state of the TCVs 52.

Although the air model is used in calculation of the estimated in-cylinder air amount as described above, calculation by the air model contains a prediction error. The prediction error specially becomes large in the transitional state as in the occasion of the operating state of the TCV 52 being switched. Preventing a misfire from occurring due to the prediction error contained in the estimated in-cylinder air amount is one of reasons of enriching the combustion air-fuel ratio in the transition control.

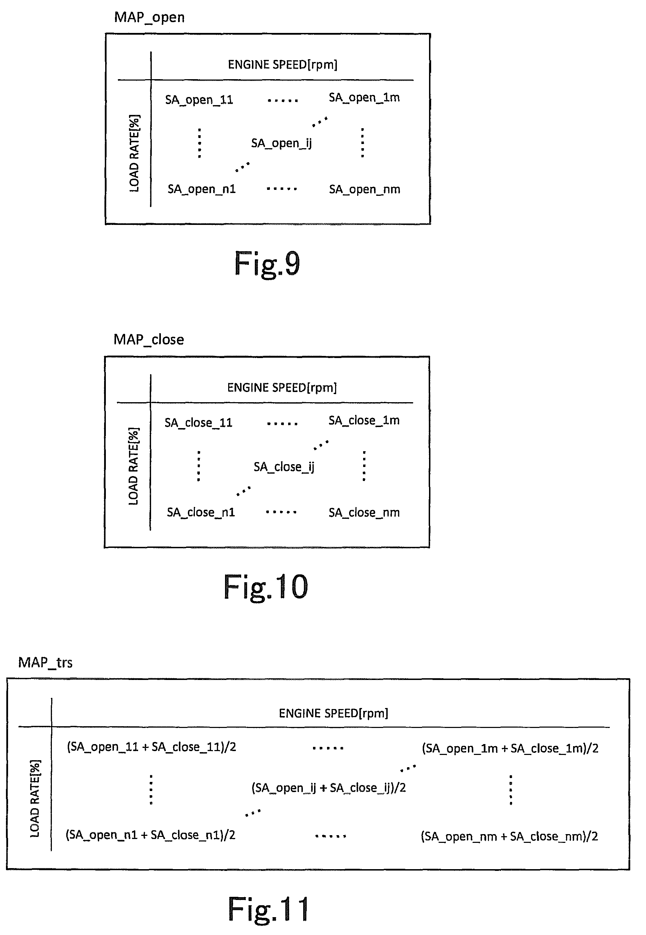

After the control device 100 executes switching of the operating state of the TCVs 52 to closing from opening, the control device 100 determines a basic ignition timing of the number N cylinder with use of an intermediate transition map (MAP_trs). The control device 100 prepares for three kinds of maps for determining the ignition timing from the engine speed and a load rate of the engine 2. A first map is a TCV opening map (MAP_open) that is used in setting of the ignition timing when the TCV 52 is opened, and Fig. 9 shows a content of the map. SA_open_ij in the TCV opening map (MAP_open) shown in Fig. 9 means a value of the ignition timing which is set when a value of the load rate corresponds to an index number i, and a value of the engine speed corresponds to an index number j. A second map is a TCV closing map (MAP_close) that is used in setting of the ignition timing when the TCV 52 is closed, and Fig. 10 shows a content of the map. SA_close_ij in the TCV closing map (MAP_close) shown in Fig. 10 means a value of the ignition timing which is set when the value of the load rate corresponds to the index number i and the value of the engine speed corresponds to the index number j. A third map is an intermediate transition map (MAP_trs) described above that is used in setting of the ignition timing when switching of the operating state of the TCV 52 is performed, and Fig. 11 shows a content thereof. An intermediate value between the set value of the TCV opening map (MAP_open) and the set value of the TCV closing map (MAP_close) is stored in the intermediate transition map (MAP_trs). More specifically, when the value of the load rate corresponds to the index number i, and the value of the engine speed corresponds to the index number j, the value of the ignition timing is set at (SA_open_ij+SA_close_ij)/2, according to the intermediate transition map MAP_trs.

In order to keep combustion efficiency high by optimizing the ignition timing, it is necessary to regulate the ignition timing in accordance with a combustion speed. Since the air flow velocity becomes relatively high when the TCV 52 is closed, disturbance in the cylinder becomes large and the combustion speed becomes high. Consequently, the ignition timing needs to be relatively retarded. For the opposite reason, the ignition timing needs to be relatively advanced when the TCV 52 is opened. Consequently, the set value in the TCV closing map (MAP_close) is a relatively late ignition timing, and the set value in the TCV opening map (MAP_open) is a relatively early ignition timing. The reason why the set value in the intermediate transition map (MAP_trs) is made an intermediate value between them is that when switching of the operating state of the TCV 52 is performed, the in-cylinder air flow velocity is estimated to be an intermediate velocity between the velocity before switching and the velocity after switching.

The control device 100 adds a retardation amount ΔSA_rich to the basic ignition timing which is determined by using the intermediate transition map (MAP_trs). The reason of adding the retardation amount ΔSA_rich is to cancel off a torque increase as a result of making the set air-fuel ratio A/F_trs in the transition control richer than the normal set air-fuel ratio A/F_lean, by torque reduction by retardation of the ignition timing. The intermediate ignition timing (SA_open_ij+SA_close_ij)/2 between the ignition timing SA_open_ij before switching of the operating state of the TCV 52 and the ignition timing SA_close_ij after switching is set as a reference, and the ignition timing which is retarded from the reference by the retardation amount ΔSA_rich is adopted as the ignition timing of the number N cylinder, whereby a torque fluctuation that accompanies switching of the operating state of the TCV 52 can be restrained more. In more detail, the retardation amounts ΔSA_rich are separately set when the operating state of the TCV 52 is switched to opening from closing and when the operating state of the TCV 52 is switched to closing from opening.

As described above, the time period of switching of the operating state of the TCVs 52 overlaps only the intake stroke of the number N cylinder, and therefore the influence of switching of the operating state of the TCVs 52 is not exerted on the cylinders the ignition timings of which are earlier than that of the number N cylinder. Consequently, in the example shown in Fig. 7, ignition in the number N-3 cylinder, number N-2 cylinder and number N-1 cylinder is performed in a period until the ignition of the number N cylinder after switching of the operating state of the TCVs 52 is determined, and the ignition timings of these cylinders can be determined by using the TCV opening map (MAP_open).

An influence on the cylinder the ignition timing of which is later than that of the number N cylinder depends on an elapsed time after switching of the operating state of the TCVs 52. However, it is the number N cylinder that is affected by the change in the air flow velocity in the cylinder, and only the change in the in-cylinder air amount affects the cylinders the ignition timings of which are later than that of the number N cylinder. In the example shown in Fig. 7, the intake strokes of the number N+1 cylinder, the number N+2 cylinder and the number N+3 cylinder overlap the time period in which the in-cylinder air amount changes, and therefore, the change in the in-cylinder air amount accompanying switching of the operating state of the TCVs 52 affects these cylinders. However, the change in the in-cylinder air amount can be estimated on the basis of the air model, and therefore, the influence which is exerted on combustion of the cylinders following the number N cylinder by switching of the operating state of the TCV 52 is small. Consequently, it is not necessary to perform the transition control for the number N+1 cylinder, the number N+2 cylinder and the number N+3 cylinder, and the fuel injection amount Q(A/F_lean) can be calculated on the basis of the estimated in-cylinder air amount so that the combustion air-fuel ratio becomes the normal set air-fuel ratio A/F_lean of the lean burn operation. Further, the ignition timings of these cylinders can be determined by using the TCV closing map (MAP_close).

### 4. Method for Determining Timing for Switching Operating State of TCV

In the example shown in Fig. 7, switching of the operating state of the TCVs 52 is executed in the intake stroke of the cylinder at which the timing for fuel injection arrives first, after switching of the operating state of the TCVs 52 is determined. However, it is known that cylinders have individual differences, and cylinders with good combustion and cylinders with bad combustion are present due to the influences of manufacturing errors and a secular change. In the example shown in Fig. 7, the number N cylinder is the cylinder which is affected by switching of the operating state of the TCV 52 most significantly, and if the cylinder with the worst combustion (hereinafter, also referred to as a worst combustion cylinder) corresponds to the number N cylinder, there is a high risk of combustion being unstable, and worsening of exhaust gas performance or the like occurring. Consequently, the worst combustion cylinder is desirably caused to correspond to the cylinder (the N+3 cylinder in the example shown in Fig. 7) which is most unaffected by switching of the operating state of the TCVs 52 (since the engine 2 is an in-line four-cylinder engine, the number N+4 cylinder corresponds to the number N cylinder, and is the cylinder which is affected most significantly).

Whether combustion of each of the cylinders is good or not can be determined by processing the signal of the combustion pressure sensor 42 which is provided at each of the cylinders. For example, if the combustion mass ratio is calculated at each crank angle from the signal of the combustion pressure sensor 42, and a time period until the combustion mass ratio becomes a predetermined ratio (10%, for example) after the ignition timing is calculated, the time period can be made a parameter indicating an extent of the combustion speed. It can be determined that ass a fluctuation coefficient of the combustion speed is larger, the cylinder has worse combustion, and as the fluctuation coefficient of the combustion speed is smaller, the cylinder has better combustion. By investigating the fluctuation coefficient of the combustion speed at each of the cylinders, superiority or inferiority of the cylinders can be determined in the sequence from the best combustion. It is preferable to investigate the fluctuation coefficient of the combustion speed throughout a plurality of cycles for each of the cylinders, and superiority or inferiority is determined on the basis of an average value thereof.

Further, there is known combustion control using the signal of the combustion pressure sensor 42. For example, JP2015-094339A discloses controlling combustion properly by performing feedback control of the fuel injection amount so that a time period (the time period is called SA-CA10) until the combustion mass ratio reaches 10% after the ignition timing reaches a target value. It is also widely known to control combustion properly by performing feedback control of the ignition timing so that a crank angle (the crank angle is called CA50) at which the combustion mass ratio becomes 50% reaches a target value. Feedback values in the combustion control as above become larger values as the combustion is worse. Consequently, it can be determined that as the feedback value is larger, the cylinder has worse combustion, and as the feedback value is smaller, the cylinder has better combustion. Superiority and inferiority of the cylinders can be determined in the sequence from the best combustion by investigating large or small of the feedback value of each of the cylinders. It is preferable to investigate the feedback value throughout a plurality of cycles at each of the cylinders, and determine superiority or inferiority from an average value thereof.

Further, it can be determined that as the cylinder has a longer combustion time period, the cylinder has worse combustion, and as the cylinder has a shorter combustion time period, the cylinder has better combustion, and therefore, by calculating the combustion time period for each of the cylinders, superiority or inferiority can be determined for the cylinders in sequence from the best combustion. It is preferable to investigate the combustion time period throughout a plurality of cycles for each of the cylinders, and determine superiority or inferiority from an average value thereof. The combustion time period can be calculated as a time period until the combustion mass ratio becomes 100% after the combustion mass ratio becomes larger than 0%. Further, a heat release rate that is a heat generation amount per unit crank angle is calculated from the signal of the combustion pressure sensor 42, and a time period until the heat release rate has a negative value again after the heat release rate reaches a positive value may be adopted as the combustion time period.

The worst combustion cylinder can be identified by determining whether combustion of each of the cylinders is good or not by the method as above, and superiority and inferiority are determined for the cylinders in the sequence from the best combustion. Subsequently, by performing switching of the operating state of the TCVs 52 so that the time period of switching of the operating state of the TCVs 52 and the intake stroke of the cylinder subsequent to the worst combustion cylinder in the sequence of ignition overlap each other, the worst combustion cylinder can be allowed to correspond to the cylinder (the number N+3 cylinder in the example shown in Fig. 7) which is most unaffected by switching of the operating state of the TCVs 52. By determining the timing for switching the operating state of the TCVs 52 by the method like this, the influence of switching of the operating state of the TCV 52 on the cylinder with bad combustion is reduced, and worsening of exhaust performance and a torque fluctuation accompanying switching of the operating state of the TCVs 52 can be restrained more.

Further, as another method for determining the timing for switching the operating state of the TCVs 52, the cylinder with the best combustion (hereinafter, referred to as the best combustion cylinder) may be caused to correspond to the cylinder (the number N cylinder in the example shown in Fig. 7) which is affected by switching of the operating state of the TCVs 52 most significantly. That is to say, switching of the operating state of the TCVs 52 may be performed in such a manner that the time period of switching of the operating state of the TCVs 52 and the intake stroke of the best combustion cylinder overlap each other. By determining the timing for switching the operating state of the TCV 52 by the method like this, worsening of the exhaust performance and torque fluctuation accompanying switching of the operating state of the TCVs 52 can be effectively restrained.

It is preferable to perform determination of whether the combustion of the respective cylinders is good or bad regularly, and identify the worst combustion cylinder (or the best combustion cylinder) again regularly. This is because whether combustion is good or bad changes over time by the influence of adherence of deposit and the like.

### 5. Rich Spike Using Variable Valve Device

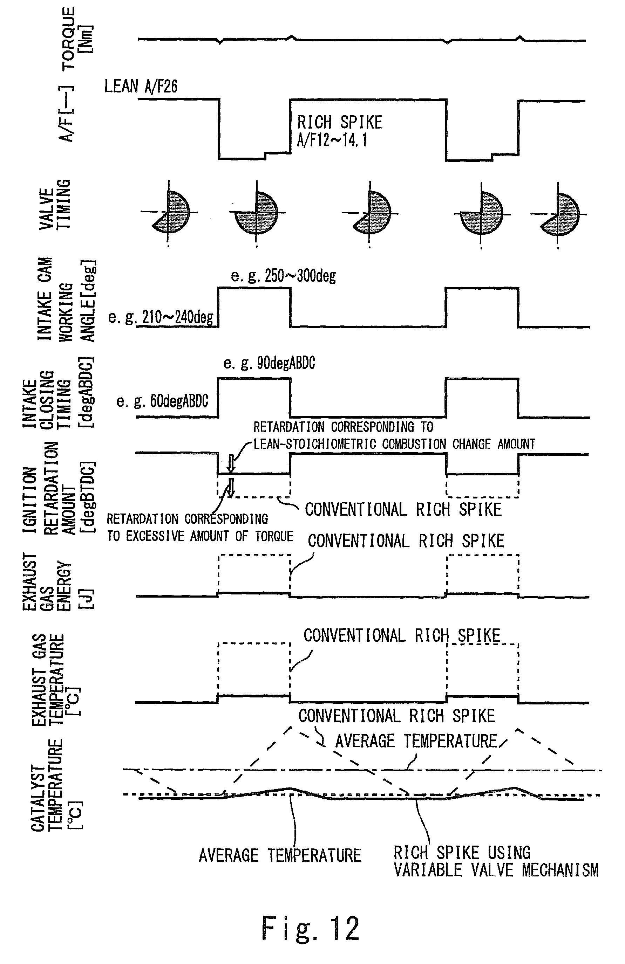

In the end, rich spike using a variable valve device which is also effective as rich spike relating to switching of the operating state of the TCVs 52 will be described with use of Fig. 12. In the first row from the top in Fig. 12, a time chart showing a change in torque by time is drawn. In the second row, a time chart showing a change in the combustion air-fuel ratio (A/F) by time is drawn. In the third row, valve timing of the intake valve which is controlled by the variable valve device is drawn. In the fourth row, a time chart showing a change by time in a working angle of an intake cam of the variable valve device. In the fifth row, a time chart showing a change by time in closing timing of the intake valve is drawn. In the sixth row, a time chart showing a change in ignition timing by time is drawn. In the seventh row, a time chart showing a change in energy of exhaust gas by time is drawn. In the eighth row, a time chart showing a change by time in the temperature of the exhaust gas is drawn. In the ninth row, a time chart showing a change by time in the temperature of a catalyst is drawn.

As shown in Fig. 12, rich spike using the variable valve device is a method for making the combustion air-fuel ratio fuel-rich by decreasing the in-cylinder air amount by enlarging the working angle of the intake valve and retarding the closing timing to be significantly later than BTDC. According to the method, it is not necessary to increase the fuel injection amount significantly as in the conventional rich spike, and therefore, retardation of the ignition timing corresponding to the excessive amount of torque is not required. Accordingly, energy that is given to the exhaust gas is reduced to restrain increase in the exhaust gas temperature, and therefore the catalyst temperature can be prevented from being higher than a purifying window.

### 6. Other Embodiments

Although in the aforementioned embodiment, the present disclosure is applied to the engine equipped with the tumble control valves, the present disclosure can be also applied to an engine equipped with swirl control valves.

Although in the aforementioned embodiment, the tumble control valves of the respective cylinders are configured to be operated integrally by the electric motor, the present disclosure can be also applied to a configuration in which the tumble control valves (or swirl control valves) of the respective cylinders are operated independently by exclusive electric motors.

Although in the aforementioned embodiment, the present disclosure is applied to the engine equipped with the port injection valves, the present disclosure can be also applied to an engine equipped with in-cylinder injection valves, and an engine equipped with both of port injection valves and in-cylinder injection valves.

Further, the present disclosure can be also applied to a multiple cylinder engine such as an in-line three-cylinder engine and a V-type six-cylinder engine, besides an in-line four-cylinder engine.

## Claims

1. A control device (100) for an internal combustion engine having a NOx storage reduction catalyst (14) disposed in an exhaust passage (10), and an air flow control valve (52) that changes a velocity of an air flow generated in a cylinder (30), and capable of a lean burn operation by a predetermined air-fuel ratio that is leaner than a theoretical air-fuel ratio, comprising:
switching means configured to switch an operating state of the air flow control valve (52);
NOx storage amount estimation means configured to estimate a NOx storage amount of the NOx storage reduction catalyst (14);
transition control means configured to execute transition control of making a combustion air-fuel ratio in a cycle of which an intake stroke overlaps a time period of switching the operating state of the air flow control valve (52), leaner than the theoretical air-fuel ratio and richer than the predetermined air-fuel ratio, when the operating state of the air flow control valve (52) is switched during implementation of the lean burn operation, and the NOx storage amount which is estimated is smaller than a determination value; and
rich spike means that executes a rich spike that makes a combustion air-fuel ratio richer than the theoretical air-fuel ratio, for a predetermined time period including the time period of switching the operating state of the air flow control valve, when the operating state of the air flow control valve is switched during implementation of the lean burn operation, and the NOx storage amount which is estimated is greater than or equal to the determination value.

2. The control device for an internal combustion engine according to claim 1,
wherein the internal combustion engine has a plurality of cylinders (30), an air flow control valve (52) is provided in each of the cylinders (30), and the air flow control valves (52) in the respective cylinders (30) are configured to operate integrally,
the switching means is configured to switch the operating state of the air flow control valves (52) such that the time period of switching the operating state of the air flow control valves (52) overlaps only an intake stroke of any one of the plurality of cylinders (30), and
the transition control means makes a combustion air-fuel ratio of the cylinder (30) of which the intake stroke overlaps the time period of switching the operating state of the air flow control valves (52), leaner than the theoretical air-fuel ratio and richer than the predetermined air-fuel ratio.

3. The control device for an internal combustion engine according to claim 1,
wherein the transition control means is configured to retard an ignition timing of the cycle of which the intake stroke overlaps the time period of switching the operating state of the air flow control valve (52), with respect to an intermediate ignition timing between an ignition timing corresponding to an operating state before switching of the air flow control valve (52), and an ignition timing corresponding to an operating state after switching of the air flow control valve (52), in the transition control.

4. The control device for an internal combustion engine according to claim 2,
wherein the transition control means is configured to retard an ignition timing of the cylinder of which the intake stroke overlaps the time period of switching the operating state of the air flow control valves, with respect to an intermediate ignition timing between an ignition timing corresponding to an operating state before switching of the air flow control valves (52), and an ignition timing corresponding to an operating state after switching of the air flow control valves (52), in the transition control.

5. The control device for an internal combustion engine according to claim 2 or 4,
wherein the internal combustion engine is equipped with a combustion pressure sensor (42) in each of the cylinders (30),
the control device further comprises means configured to identify a worst combustion cylinder in which combustion is the worst of all the cylinders (30) by processing signals of the combustion pressure sensors (42), and
the switching means is configured to switch the operating state of the air flow control valves (52) so that the time period of switching the operating state of the air flow control valves (52) overlaps an intake stroke of a cylinder subsequent to the worst combustion cylinder in a sequence of ignition.

6. The control device for an internal combustion engine according to claim 2 or 4,
wherein the internal combustion engine is equipped with a combustion pressure sensor (42) in each of the cylinders (30),
the control device further comprises means configured to identify a best combustion cylinder in which combustion is the best of all the cylinders (30) by processing signals of the combustion pressure sensors (42), and
the switching means is configured to switch the operating state of the air flow control valves (52) so that the time period of switching the operating state of the air flow control valves (52) overlaps an intake stroke of the best combustion cylinder.
